# EUROPEAN PATENT SPECIFICATION

(11) **EP 1 942 409 B1**
(45) Date of publication and mention of the grant of the patent: **11.03.2015**
(21) Application number: 07000194.6
(22) Date of filing: 05.01.2007
(51) Int. Cl.: G06F 3/16, B60R 11/02

(54) **Media connect device, and system using the same**
Medienanschlussvorrichtung und System damit
Dispositif de connexion de support et système l'utilisant

(43) Date of publication of application: 09.07.2008
(73) Proprietor: Telechips Inc., Seoul 138-160 (KR)
(72) Inventor: Lee, Yong-Kwon, Kangnam-gu Seoul 135-100 (KR)
(74) Representative: Weber, Joachim

(56) References cited:
- EP-A- 1 698 518
- WO-A-2005/124784
- KR-A- 20050 006 381

## Description

### BACKGROUND OF THE INVENTION

### 1. Field of the Invention

The present invention relates to a media connect device which serves as a medium between a media player and an audio device, controls the media player in response to a user's manipulation of the audio device, performs USB-packet processing on an audio signal reproduced by the media player, and provide the audio signal packets to the audio device such that sound can be outputted from the audio device.

### 2. Description of the Related Art

EP 1698518 D1 describes a multimedia device integration system for integrating any kind of after-market audio/video device with an existing car stereo system.

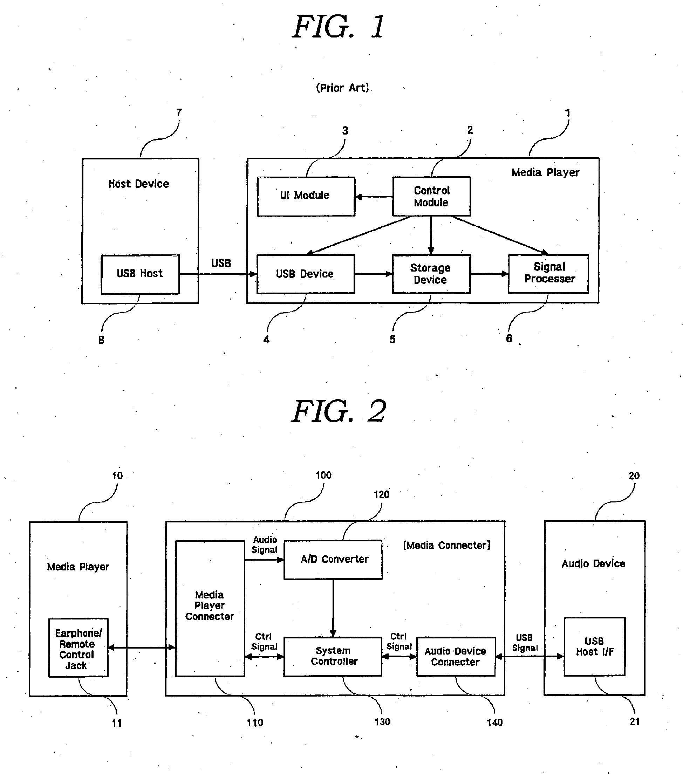

Media players such as MP3 players or voice recorders have been widely used, the media players reproducing and recording a media file. Fig. 1 is a function block diagram schematically illustrating the configuration of a conventional media player.

The conventional media player 1 has a non-volatile storage device 5, such as a flash memory, mounted therein such that a media file received from an external host device 7 such as a PC through a network can be stored in the storage device 5. When a reproducing instruction is input through a user interface (UI) module, the media file is read from the storage device 5 and is then delivered to a signal processor 6. Then, the media player 1 performs signal processing depending on a predetermined signal processing scheme such as MPEG-1 Audio Layer 3.

The host device 7 and the media player 1 have a transmission medium connection function in order to transmit and receive a media file. Fig. 1 shows an example where a USB (Universal Serial Bus) is used. In the USB technique, when two devices are connected to each other, one device performing a master function is referred to as a USB host, and the other device performing a slave function is referred to as a USB device. In Fig. 1, the host device 7 is set to a USB host, and the media player 1 is set to a USB device. For this, the host device 7 includes a USB host, and the media player 1 includes a USB device.

As for transmission mediums which can be used for such a purpose, there are provided IEEE 1394 and wireless LAN in addition to the USB. Further, the connection therebetween may be performed through a cable, connection ports, or a wireless medium. When the IEEE 1394 or wireless LAN is used, a different concept from the host-to-device concept can be used. In the case of the IEEE 1394, a peer-to-peer configuration is used in which the host device 7 is set to an SBP2 initiator and the media player 1 is set to an SBP2 target in accordance with the SBP2 (serial bus protocol 2) that is an upper protocol. Accordingly, in a general transmission medium including the USB or IEEE 1394, modeling is possible in which the host device 7 is set to a controller and the media player 1 is set to a target.

As various media players become popular, consumers increasingly want to listen to songs stored in a media player through a speaker system of a car audio or home audio device. To this end, an FM transmission function is added to a conventional media player such that a song played by a media player is transmitted over a specific FM frequency. Further, an audio device outputs an audio signal through frequency tuning in an FM reception mode. In addition, an Aux-line in a conventional audio device is separately extended and connected to an earphone jack of a media player.

Like this, as digital media technologies become popular, consumers increasingly want to directly play digital contents stored in a USB memory through a speaker system of a car audio or home audio device. To this end, there is a patent application entitled "A MEDIAL PROCESSING DEVICE USING AN EXTERNAL STORAGE DEVICE", filed by the present applicant on April 4, 2002 (Korean Patent Application No. 2003-21307) and issued on October 15, 2003 (Korean Patent Registration No. 403,376). According to this patent, an audio device includes a USB host interface to directly read and reproduce contents stored in a USB memory.

Because a group of media players such as the Apple i-POD do not include an FM reception function and can be connected only through a dedicated interface, there is a limit in using the conventional scheme, if the interface of the car audio is not additionally provided. Although consumers purchase such media players. Further, the utilization is not high.

Recently, DRM is considered to be important. Therefore, there are many cases where DRM contents are stored in a media player or USB memory. When such DRM contents are transferred to another device, various problems and difficulties can occur. Therefore, even when an external audio device is utilized, reproducing is desired to be performed in the media player which has been first registered for the contents.

### SUMMARY OF THE INVENTION

An object of the present invention is that it provides a media connect device which serves as a medium between a media player and an audio device, controls the media player in response to a user's manipulation of the audio device, performs USB-packet processing on an audio signal reproduced by the media player, and provide the audio signal packets to the audio device such that sound can be outputted from the audio device.

In order to accomplish the above objects, the present invention provides a media connect device serving as a medium between a media player and an audio device, the media connect device comprising: a media player connector including: an audio connector connected to an audio jack of the media player so as to receive an analog audio signal outputted from the media player; and a remote control connector connected to a remote control jack of the media player so as to provide a device control signal with respect to the media player, wherein the media player provides an interface to the media player; an A/D converter receiving an analog audio signal outputted from the media player through the media player connector and generating digital audio data through A/D conversion processing; an audio device connector connected to the audio device through a specific transmission medium so as to provide an interface to the audio device; a system controller packetizing the digital audio data provided from the A/D converter in accordance with the transmission medium, providing the generated digital audio data packets to the audio device through the audio device connector such that the audio device outputs sound of the analog audio signal through D/A conversion, analyzing the contents of a user's manipulation from manipulation control data when the manipulation control data generated by the user's manipulation in the audio device are provided as data packets depending on the transmission medium through the audio device connector, and generating a corresponding device control signal with respect to the media player so as to provide the device control signal to the media player through the media player connector.

In order to accomplish the above objects, the media connect device according to the present invention is characterized in that the transmission medium is a USB, and further in that the audio device connector includes a USB connector which is connected to a USB host interface of the audio device through the USB so as to provide the generated digital audio data packets as USB packet signals to the audio device and, when receiving a device control signal for controlling the media player from the audio device, provides the device control signal to the system controller.

In order to accomplish the above objects, the present invention provides a media connect system including a media player, an audio device, and a media connect device, the media connect system comprising: a media player reproducing a digital file so as to output an analog audio signal to an audio jack and performing its own device control depending on specific remote control data provided through a remote control jack; a media connect device including: a media player connector having an audio connector providing an interface with respect to the media player, the audio connector corresponding to the audio jack, and a remote control jack corresponding to the remote control jack; an A/D converter receiving converter receiving an analog audio signal through the audio connector and generating digital audio data through A/D conversion processing; an audio device connector connected to the audio device through a specific transmission medium so as to provide an interface; and a system controller packetizing the digital audio data in accordance with the transmission medium, providing the generated digital audio packets to the audio device through the audio device connector, analyzing the contents of manipulation from manipulation control data when the manipulation control data from the audio device are provided as data packets depending on the transmission medium through the audio device connector, and generating a corresponding device control signal with respect to the media player so as to provide the device control signal to the media player through the remote control connector; and an audio device extracting digital audio data from the digital audio data packets provided from the media connector, performing D/A conversion such that sound of the analog audio signal is outputted, generating manipulation control data when a device manipulation is inputted from a user, and providing the manipulation control data as data packets depending on the transmission medium to the media connect device through the audio device connector.

### BRIEF DESCRIPTION OF THE DRAWINGS

These and/or other aspects and objects of the present general inventive concept will become apparent and more readily appreciated from the following description of the embodiments, taken in conjunction with the accompanying drawings of which:

Fig. 1 is a function block diagram schematically illustrating the configuration of a conventional media player;

Fig. 2 is a function block diagram illustrating the configuration of a media player according to an embodiment of the invention;

Fig. 3 shows an example where a car audio is used as an audio device, in order to explain a connection of the media connect device according to the embodiment of the invention; and

Fig. 4 is a reference view showing a state where the media connect device according to the embodiment of the invention is used.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to like elements throughout. The embodiments are described below in order to explain the present general inventive concept by referring to the figures.

Hereinafter, a media connect device and a system using the same according to an embodiment of the present invention will be described in detail with reference to the accompanying drawings.

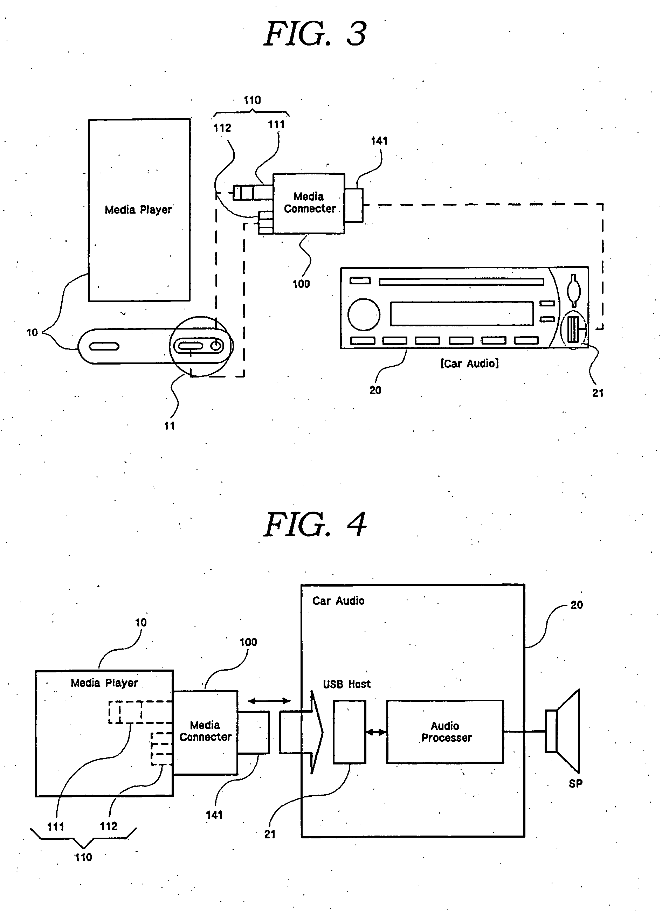

Fig. 2 is a function block diagram illustrating the configuration of the media connect device according to the embodiment of the invention. Fig. 3 shows an example where a car audio is used as an audio device, in order to explain a connection of the media connect device according to the embodiment of the invention. Fig. 4 is a reference view showing a state where the media connect device of Fig. 3 is used.

As shown in Fig. 2, the media connect device 100 is connected between a media player 10 and an audio device 20 so as to serve a medium therebetween. The media connect device 100 includes a media player connector 110, an A/D converter 120, a system controller 130, and an audio device connector 140.

The media player connector 110 is connected to the media player 10 through a predetermined transmission medium so as to provide an interface between the media player 10 and the media connect device 100. As such an interface, an analog audio signal is basically included, the analog audio signal being output as a reproduction result of a media file in the media player 10. More preferably, a control access with respect to the media player 10 is further included.

As shown in Fig. 3, the media player connector 110 includes an earphone connector 111 and a remote control connector 112. The earphone connector 111 is connected to an earphone jack of the media player 10 so as to receive an analog audio signal. The remote control connector 112 is connected to a remote control jack 11 of the media player 10 so as to output a device control signal to the media player 10. In this case, the device control signal is provided from the audio device 20, as will be described below.

The shape of the media player connector 110 is determined in accordance with the construction of the media player 10. For example, when the media player 10 is provided so that the earphone jack and the remote control jack 11 are separated from each other as shown in Fig. 3, the media player connector 110 is constructed so that the earphone connector 111 and the remote control connector 112 are separated from each other so as to correspond to the earphone jack and the remote control jack 11, respectively. The earphone jack and the remote control jack 11 shown in Fig. 3 represent the shape of a jack of Apple i-POD.

The media player connector 110 can be applied not only to Apple i-POD but also to other media players. When the media player 10 is constructed so as to have a single jack (not shown) providing both an earphone function and a remote control function, there is provided a single connector (not shown) corresponding to the jack. As such, the structure of the media player connector 110 is not limited to those exemplified in Fig. 3 and 4, but can be modified in accordance with the connection interface of a media player to be applied.

The A/D converter 120 converts an analog audio signal into digital audio data, the analog audio signal being transmitted from the media player 10 through the media player connector 110. Then, the A/D converter 120 provides the converted digital audio data to the system controller 130. At this time, the conversion performed by the A/D converter 120 to generate digital audio data is a typical analog/digital conversion process in which a processing load is considered.

The system control module 130 packets the digital audio data provided from the A/D converter 120 into a USB format. Then, the system control module 130 provides the generated USB packets to the audio device 20 through the audio device connector 140.

In a state where the output of the media player 10 is transmitted to the audio device 20 through the media connector 100 such that sound is output, and if a user performs a specific manipulation through a user interface of the audio device 20, device control according thereto is performed in the media player 10. Hereinafter, the process will be described.

In response to the user's manipulation, manipulation control data is generated by the audio device 20. The manipulation control data is transmitted as a USB packet to the media connect device 100 through the audio device connector 140. The manipulation is analyzed by the system controller 130 such that a device control signal with respect to the media player 10 is generated. The generated device control signal is transmitted to the media player 10 through the media player connector 110. Through such a process, the device control according to the user's manipulation is performed in the media player 10.

The manipulation means a signal which controls a typical operation of the media player 10 such as an on/off function, a search function, a select function, a play function, or a fast forward/rewind function.

When processing an audio signal output from the media player 10, the system controller 130 packets digital audio data into a USB format and provides the generated USB packets to the audio device 20. In order to perform such an operation, the system controller 130 inputs digital audio data to a specific register and then provides USB packets to the audio device 20 in accordance with a trigger manipulation.

The audio device connector 140 is connected to a USB host interface 21 of the audio device 20 through a predetermined transmission medium such as a USB connector so as to provide a communication using USB signal packets.

As described above, the media connect device of the invention uses a well-known USB transmission medium as an example of a transmission medium. The audio device connector 140 includes a USB connector 141, which is connected to the USB host interface 21 of the audio device 20 through the USB transmission medium so as to provide USB signal packets to the audio device 20 and receive manipulation information of the media player 10.

Fig. 4 is a reference view showing a state where the media connect device according to the embodiment of the invention is used. In this state, the earphone connector 11 and the remote control connector 112 of the media connect device 100 are mounted and combined with the earphone jack/remote control jack 11 of the media player 10. Further, the USB connector 141 of the media connector 100 is mounted to the USB host interface 21 of the audio device 20.

Accordingly, a user can control the media player 10 through a key button manipulation of the audio device 20 by using the USB communication relay of the media connect device 100. Further, the user can listen to sound according to an audio signal, outputted from the media player 10, through a speaker SP of the audio device 20.

An audio processor of the audio device 20 acquires a digital audio signal from digital audio signal data transmitted from the media connect device 100 as USB packets and converts the digital audio signal into an analog audio signal through D/A conversion so as to output sound. From that, it can be expected that a bit number in the A/D conversion and D/A conversion have an important effect on a sound quality.

According to the media connect device of the invention, the media connect device serves as the medium between the media player and the audio device such that the media player is controlled in accordance with a user's manipulation of the audio device. Further, an audio signal to be reproduced by the media player is transmitted through the USB packet processing such that the audio device can output sound.

Further, the reproducing operation itself is performed in the media player. Therefore, even in a case of DRM contents, a user can enjoy songs, which have been previously purchased, without a separate software being supported or repurchased.

Further, as the existing USB interface of the audio device is utilized as it is, the exterior does not need to be modified, or a dedicated interface does not need to be installed.

Although a few embodiments of the present general inventive concept have been shown and described, it will be appreciated by those skilled in the art that changes may be made in these embodiments without departing from the general inventive concept, the scope of which is defined in the appended claims.

## Claims

1. A media connect device (100) serving as a medium between a media player (10) and an audio device (20), the media connect device (100) comprising:
a media player connector (110) including:
an audio connector (111) connected to an audio jack of the media player (10) so as to receive an analog audio signal outputted from the media player (10); and
a remote control connector (112) connected to a remote control jack (11) of the media player (10) so as to provide a device control signal with respect to the media player (10),
wherein the media player (10) provides an interface to the media player connector (10);
an A/D converter (120) receiving an analog audio signal outputted from the media player (10) through the media player connector (110) and generating digital audio data through A/D conversion processing;
an audio device connector (140) connected to the audio device (20) through a specific transmission medium so as to provide an interface to the audio device (20);
a system controller (130) packetizing the digital audio data provided from the A/D converter (120) in accordance with the transmission medium, providing the generated digital audio data packets to the audio device (20) through the audio device connector (140) such that the audio device (20) outputs sound of the analog audio signal through D/A conversion, analyzing the contents of a user's manipulation from manipulation control data when the manipulation control data generated by the user's manipulation in the audio device (20) are provided as data packets depending on the transmission medium through the audio device connector (140), and generating a corresponding device control signal with respect to the media player (10) so as to provide the device control signal to the media player (10) through the media player connector (110).

2. The media connect device (100) according to claim 1,
wherein the transmission medium is a USB, and the audio device connector (140) includes a USB connector which is connected to a USB host interface (21) of the audio device (20) through the USB so as to provide the generated digital audio data packets as USB packet signals to the audio device (20) and, when receiving a device control signal for controlling the media player (10) from the audio device (20), provides the device control signal to the system controller (130).

3. A media connect system including a media player (10), an audio device (20), and a media connect device (100) according to any of the preceding claims.

## Patentansprüche

1. Medien-Verbindungsvorrichtung (100), die als Medium zwischen einem Media-Player (10) und einer Audiovorrichtung (20) dient, wobei die Medien-Verbindungsvorrichtung (100) umfasst:
einen Media-Player-Steckverbinder (110), umfassend:
einen Audio-Steckverbinder (111), der mit einer Audiobuchse des Media-Players (10) verbunden ist, um ein vom Media-Player (10) ausgegebenes analoges Audiosignal zu empfangen; und
einen Fernbedienung-Steckverbinder (112), der mit einer Fernbedienungsbuchse (11) des Media-Players (10) verbunden ist, um ein Vorrichtungssteuersignal in Bezug auf den Media-Player (10) bereitzustellen,
wobei der Media-Player (10) eine Schnittstelle für den Media-Player-Steckverbinder (110) bereitstellt;
einen A/D-Wandler (120), der ein vom Media-Player (10) ausgegebenes analoges Audiosignal durch den Media-Player-Steckverbinder (110) empfängt und digitale Audiodaten durch eine A/D- Umwandlungsverarbeitung erzeugt;
einen Audiovorrichtung-Steckverbinder (140), der mit der Audiovorrichtung (20) durch ein spezifisches Übertragungsmedium verbunden ist, um eine Schnittstelle für die Audiovorrichtung (20) bereitzustellen;
eine System-Steuereinheit (130), welche die vom A/D-Wandler (120) gemäß dem Übertragungsmedium bereitgestellten digitalen Audiodaten paketiert, die erzeugten digitalen Audiodatenpakete der Audiovorrichtung (20) durch den Audiovorrichtung-Steckverbinder (140) bereitstellt, sodass die Audiovorrichtung (20) einen Ton des analogen Audiosignals durch eine D/A Umwandlung ausgibt, die Inhalte einer Benutzermanipulation aus Manipulations-Steuerdaten analysiert, wenn die durch die Benutzermanipulation erzeugten Manipulations-Steuerdaten in der Audiovorrichtung (20) als Datenpakete abhängig vom Übertragungsmedium durch den Audiovorrichtung-Steckverbinder (140) bereitgestellt sind, und ein entsprechendes Vorrichtungssteuersignal in Bezug auf den Media-Player (10) erzeugt, um dem Media-Player (10) das Vorrichtungssteuersignal durch den Media-Player-Steckverbinder (110) bereitzustellen.

2. Medienverbindungsvorrichtung (100) nach Anspruch 1,
wobei das Übertragungsmedium ein USB ist, und der Audiovorrichtung-Steckverbinder (140) einen USB-Anschluss umfasst, der mit einer USB-Hostschnittstelle (21) der Audiovorrichtung (20) durch den USB verbunden ist, um die erzeugten digitalen Audiodatenpakete der Audiovorrichtung (20) als USB-Paketsignale bereitzustellen und, wenn ein Vorrichtungssteuersignal zum Steuern des Media-Players (10) von der Audiovorrichtung (20) empfangen wird, das Vorrichtungssteuersignal der System-Steuereinheit (130) bereitstellt.

3. Medienverbindungssystem, das einen Media-Player (10), eine Audiovorrichtung (20) und eine Medienverbindungsvorrichtung (100) gemäß einem der vorhergehenden Ansprüche umfasst.

## Revendications

1. Dispositif de connexion multimédia (100) servant de support entre un lecteur multimédia (10) et un dispositif audio (20), le dispositif de connexion multimédia (100) comprenant :
un connecteur de lecteur multimédia (110) comportant :
un connecteur audio (111) connecté à une prise audio du lecteur multimédia (10) de manière à recevoir un signal audio analogique délivré en sortie à partir du lecteur multimédia (10) ; et
un connecteur de commande à distance (112) connecté à un prise de commande à distance (11) du lecteur multimédia (10) de manière à fournir un signal de commande de dispositif par rapport au lecteur multimédia (10),
dans lequel le lecteur multimédia (10) fournit une interface au connecteur de lecteur multimédia (110) ;
un convertisseur A/N (120) recevant un signal audio analogique délivré en sortie à partir du lecteur multimédia (10) à travers le connecteur de lecteur multimédia (110) et générant des données audio numériques à travers un traitement de conversion A/N ;
un connecteur de dispositif audio (140) connecté au dispositif audio (20) à travers un support de transmission spécifique de manière à fournir une interface au dispositif audio (20) ;
un contrôleur de système (130) mettant en paquets les données audio numériques fournies à partir du convertisseur A/N (120) conformément au support de transmission, fournissant les paquets de données audio numériques générées au dispositif audio (20) à travers le connecteur de dispositif audio (140) de sorte que le dispositif audio (20) délivre en sortie un son du signal audio analogique à travers une conversion N/A, analysant les contenus d'une manipulation par l'utilisateur à partir de données de commande de manipulation lorsque les données de commande de manipulation générées par la manipulation par l'utilisateur dans le dispositif audio (20) sont fournies sous forme de paquets de données en fonction du support de transmission à travers le connecteur de dispositif audio (140), et générant un signal de commande de dispositif correspondant par rapport au lecteur multimédia (10) de manière à fournir le signal de commande de dispositif au lecteur multimédia (10) à travers le connecteur de lecteur multimédia (110).

2. Dispositif de connexion multimédia (100) selon la revendication 1, dans lequel le support de transmission est un USB, et le connecteur de dispositif audio (140) comporte un connecteur USB qui est connecté à une interface hôte USB (21) du dispositif audio (20) à travers l'USB de manière à fournir les paquets de données audio numériques générées sous forme de signaux de paquets USB au dispositif audio (20) et, lors de la réception d'un signal de commande de dispositif pour commander le lecteur multimédia (10) en provenance du dispositif audio (20), fournit le signal de commande de dispositif au contrôleur de système (130).

3. Système de connexion multimédia comportant un lecteur multimédia (10), un dispositif audio (20), et un dispositif de connexion multimédia (100) selon l'une des revendications précédentes.
